# EUROPÄISCHE PATENTSCHRIFT

(11) **EP 2 699 788 B1**
(45) Veröffentlichungstag und Bekanntmachung des Hinweises auf die Patenterteilung: **21.02.2018**
(21) Anmeldenummer: 12711848.7
(22) Anmeldetag: 26.03.2012
(51) Int. Cl.: F02M 59/10, F04B 1/04, F02M 59/44, F16C 17/04

(54) **KRAFTSTOFF-HOCHDRUCKPUMPE MIT AXIALLAGER AN DER NOCKENWELLE**
HIGH PRESSURE FUEL PUMP HAVING AN AXIAL BEARING ON THE CAMSHAFT
POMPE À CARBURANT HAUTE PRESSION, DOTÉE D'UN PALIER DE BUTÉE SITUÉ SUR L'ARBRE À CAMES

(30) Priorität: 21.04.2011 DE 102011017493
(43) Veröffentlichungstag der Anmeldung: 26.02.2014
(73) Patentinhaber: Robert Bosch GmbH, 70442 Stuttgart (DE)
(72) Erfinder: DUTT, Andreas, 70469 Stuttgart (DE); GREINER, Matthias, 75397 Simmozheim (DE)
(86) Internationale Anmeldenummer: PCT/EP2012/055297
(87) Internationale Veröffentlichungsnummer: WO 2012/143209

(56) Entgegenhaltungen:
- EP-A1- 0 038 602
- WO-A1-2008/113625
- DE-A1- 1 675 076
- DE-A1- 3 025 876

## Beschreibung

Die vorliegende Erfindung betrifft eine Hochdruckpumpe für eine Kraftstoffeinspritzeinrichtung einer Brennkraftmaschine gemäß dem Oberbegriff des Anspruchs 1.

### Stand der Technik

Im Stand der Technik werden für Common Rail Systeme unter anderem Radialkolbenpumpen zum Aufbau des Hochdrucks in einem Hochdruckspeicher des Common Rail Systems verwendet. Die Radialkolbenpumpen können eines oder mehrere Pumpenelemente mit jeweiligen Pumpenkolben aufweisen, welche von einer Antriebswelle mittelbar beispielsweise über einen Nocken in eine Hubbewegung versetzt werden, um einen Saughub, während welchem Kraftstoff in einen Pumpenarbeitsraum der Hochdruckpumpe eingesaugt wird, und einen Druckhub auszuführen, in welchem der angesaugte Kraftstoff komprimiert wird und an den Hochdruckspeicher des Common Rail Systems ausgegeben wird.

Beispielsweise ist in DE 10 2008 043 429 A1 eine Radialkolbenpumpe mit einem Nockenwellenantrieb beschrieben. Hierbei ist in einem Pumpengehäuse eine Antriebswelle drehbar gelagert. Die Antriebswelle weist zwischen zwei Lagerbuchsen eine Nockenbahn auf, die einen Pumpenkolben in einer Hubbewegung antreibt. Der Pumpenkolben ist im Pumpengehäuse in einer radial zur Drehachse der Antriebswelle verlaufenden Zylinderbohrung verschiebbar geführt und stützt sich mit einem Kolbenfuß über eine in einem Rollenschuh drehbar gelagerte Laufrolle an der Nockenbahn ab. Die Antriebswelle ist darüber hinaus in zwei als Lagerbuchsen ausgebildeten Axiallagern drehbar gelagert.

Die Kraftübertragung zwischen dem Pumpenkolben und der Antriebswelle erfolgt dabei über ein hydrodynamisches Gleitlager, welches sich aufgrund der hohen Drehzahl der Laufrolle zwischen der Laufrolle und dem Rollenschuh einer Stö-ßelbaugruppe ausbildet.

Bei den oben beschriebenen bekannten Hochdruckpumpen können durch Schräglauf der Laufrolle auf dem Nocken axiale Kräfte auf die Antriebswelle entstehen. Diese Kräfte werden am Gehäuseanlaufbund von der Antriebswelle auf das Gehäuse der Hochdruckpumpe übertragen. Um dabei mögliche Schäden zu vermeiden, müssen für die Axiallager einer so ausgestalteten Hochdruckpumpe hochwertige und damit sehr teure Lagerwerkstoffe eingesetzt werden.

Die WO 2008/113625 A1 zeigt eine Hochdruckpumpe, insbesondere zur Förderung von Kraftstoff für ein Common-Rail-Kraftstoffeinspritzsystem, umfassend einen Pumpenkörper, in dem wenigstens ein Nockentrieb mit einer Nockenwelle aufgenommen ist, die mittels wenigstens eines Radiallagers und wenigstens eines einen Anlaufkörper aufweisenden Axiallagers drehbar gelagert ist, wobei die Lager mit einem zugeführten Schmiermittel geschmiert sind, wobei das Schmiermittel durch zumindest einen zwischen dem Anlaufkörper und dem Pumpenkörper eingebrachten Schmierkanal zuführbar ist.

Die DE 30 25 876 A1 zeigt ein Keilflächen-Drucklager mit einer Lagerfläche, mehreren in der Lagerfläche gebildeten und radial dazu verlaufenden Schmierölnuten, und mehreren Keilflächen und ebenen Flächen, wobei jede Keilfläche und jede ebene Fläche zwischen den benachbarten, radial zur Lagerfläche verlaufenden Schmierölnuten angeordnet ist, wobei mehrere in den Schmierölnuten gebildete Düsenöffnungen zur Ölzufuhr ausgebildet sind und wenigstens eine Düsenöffnung nahe der jeweiligen Keilfläche der Lagerfläche angeordnet ist.

Daher ist es erforderlich, eine Hochdruckpumpe zu schaffen, bei der einfachere und somit kostengünstigere Lagerwerkstoffe einsetzbar sind.

### Offenbarung der Erfindung

### Vorteile der Erfindung

Erfindungsgemäß wird eine Hochdruckpumpe für eine Kraftstoffeinspritzeinrichtung einer Brennkraftmaschine vorgesehen, welche ein in einem Gehäuse angeordnetes Triebwerk mit einer mit zumindest einem Nocken versehenen und über ein Axiallager in dem Gehäuse gelagerten Antriebswelle und einer Stößelbaugruppe, und zumindest einen Pumpenkolben aufweist, welcher durch die Drehung der Antriebswelle um eine Drehachse herum über den zumindest einen an der Antriebswelle angeordneten Nocken und die an dem Pumpenkolben angeordnete Stößelbaugruppe in einer Hubbewegung in im Wesentlichen radialer Richtung zu der Drehachse der Antriebswelle angetrieben wird, wobei das Axiallager als Axialgleitlager ausgebildet ist.
Erfindungsgemäß ist an dem Axialgleitlager zumindest eine erste Lagerfläche als ein erster ringförmiger Anlaufbund an dem Nocken ausgebildet ist und an dem Axialgleitlager zumindest eine zweite Lagerfläche als ein zweiter ringförmiger Anlaufbund an dem Gehäuse ausgebildet, wobei an einer Oberfläche der zweiten Lagerfläche eine Vielzahl von Kanälen ausgebildet ist, welche von einem Schmiermittel während der Drehung der Antriebswelle durchströmbar sind, wobei in dem zweiten ringförmigen Anlaufbund eine Vielzahl von radialen Bohrungen vorgesehen ist, welche im Wesentlichen parallel zu der Vielzahl von Kanälen ausgebildet sind.

Durch die erfindungsgemäße Konfiguration ist es möglich, einfache Werkstoffe einzusetzen, da die Lagerfläche des Axiallagers gestaltet ist, um bei Rotation der Antriebswelle ein hydrodynamisches Axialgleitlager auszubilden. Dabei ist es darüber hinaus vorteilhaft, dass die zu übertragenden Kräfte sowie die hydrodynamischen Kräfte drehzahlabhängig sind.
Durch Vorsehen der radialen Bohrungen parallel zu der Schmiermittelkeilgeometrie der Kanäle kann ein Druckausgleich erfolgen.

Gemäß einer bevorzugten Ausführungsform ist das Axialgleitlager ein hydrodynamisches Axialgleitlager.

Vorzugsweise weist die Vielzahl von Kanälen jeweilige Kanäle auf, welche im Wesentlichen keilförmig ausgebildet sind, wobei die jeweiligen Kanäle jeweilige Spalte bilden, deren Breite im µm-Bereich liegt. Durch die entweder an der ersten Lagerfläche oder an der zweiten Lagerfläche flach ausgebildeten Keile bildet sich bei Relativbewegung ein hydrodynamischer Spalt, so dass die Bauteile durch das Schmiermittel getrennt sind und kein Verschleiß entstehen kann. Durch Ausbilden der Spalte im µm-Bereich kann in den Spalten effektiv ein Druck aufgebaut werden. Die eigentliche Lagerlänge wird sehr kurz.

Vorzugsweise ist die Hochdruckpumpe als Radialkolbenpumpe ausgebildet.

### Kurze Beschreibung der Zeichnungen

Im Nachfolgenden werden Ausführungsbeispiele der Erfindung unter Bezugnahme auf die beigefügten Zeichnungen näher beschrieben. Es zeigt:
- Fig. 1: eine teilweise Schnittansicht durch eine Hochdruckpumpe gemäß dem Stand der Technik;
- Fig. 2: eine Schnittansicht durch einen Teil des Triebwerks einer Hochdruckpumpe gemäß einer Ausführungsform;
- Fig. 3A, 3B: jeweilige schematische Darstellungen von einer an dem Gehäuse der Hochdruckpumpe vorgesehenen zweiten Lagerfläche;
- Fig. 4: eine Draufsicht auf einen ringförmigen Anlaufbund; und
- Fig. 5: eine Detailansicht des in Fig. 2 dargestellten Triebwerks.

### Ausführungsformen der Erfindung

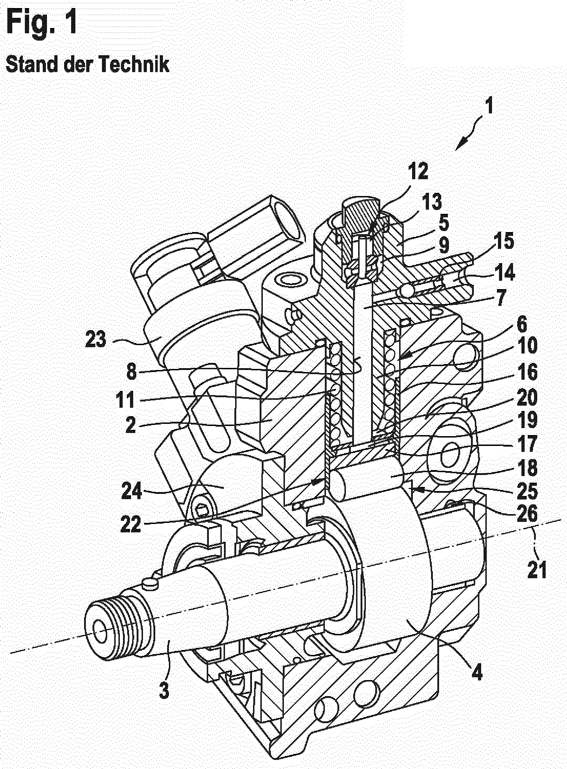

In Fig. 1 ist eine Hochdruckpumpe 1 für eine Kraftstoffeinspritzeinrichtung einer Brennkraftmaschine gemäß dem Stand der Technik dargestellt, die als Radialkolbenpumpe ausgebildet ist. Die Hochdruckpumpe 1 gemäß dem Stand der Technik weist ein Gehäuse 2 auf, das mehrteilig ausgebildet ist, und in dem eine rotierend angetriebene Antriebswelle 3 angeordnet ist, auf welcher ein Nocken 4 vorgesehen ist. Die Hochdruckpumpe 1 weist ein in einem Zylinderkopf 5 angeordnetes Pumpenelement 6 mit einem Pumpenkolben 7 auf, der durch den Nocken 4 der Antriebswelle 3 mittelbar in einer Hubbewegung in zumindest annähernd radialer Richtung zur Drehachse 21 der Antriebswelle 3 angetrieben wird. Der Pumpenkolben 7 ist in einer Zylinderbohrung 8 im Zylinderkopf 5 dicht verschiebbar geführt und begrenzt mit seiner der Antriebswelle 3 abgewandten Stirnseite in der Zylinderbohrung 8 einen Pumpenarbeitsraum 9. An seinem dem Pumpenarbeitsraum 9 abgewandten Ende weist der Pumpenkolben 7 einen im Durchmesser gegenüber seinem übrigen Bereich vergrößerten Kolbenfuß 19 auf. Wie in der Figur erkannt werden kann, ist der Zylinderkopf 5 mit einem Schaftabschnitt 10 versehen, in welchem die den Pumpenkolben 7 aufnehmende Zylinderbohrung 8 vorgesehen ist, und um welchen herum die Feder 11 angeordnet ist. Der Pumpenarbeitsraum 9 weist über einen im Gehäuse 2 verlaufenden Kraftstoffzulaufkanal (nicht dargestellt) eine Verbindung mit einem Kraftstoffzulauf beispielsweise einer Förderpumpe auf. An der Mündung des Kraftstoffzulaufkanals in den Pumpenarbeitsraum 9 ist ein in den Pumpenarbeitsraum 9 öffnendes Einlassventil 12 angeordnet, das ein federbelastetes Ventilglied 13 aufweist. Der Pumpenarbeitsraum 9 weist außerdem über einen im Zylinderkopf 5 verlaufenden Kraftstoffablaufkanal 14 eine Verbindung mit einem Auslass auf, der beispielsweise mit einem Hochdruckspeicher (nicht dargestellt) eines Common Rail Systems verbunden ist. Mit dem Hochdruckspeicher sind ein oder vorzugsweise mehrere an den Zylindern der Brennkraftmaschine angeordnete Injektoren (nicht dargestellt) verbunden, durch die Kraftstoff in die Zylinder der Brennkraftmaschine eingespritzt wird. An der Mündung des Kraftstoffablaufkanals 14 in den Pumpenarbeitsraum 9 ist ein aus dem Pumpenarbeitsraum 9 öffnendes Auslassventil 15 angeordnet.

Dem Pumpenelement 6 ist eine Stößelbaugruppe 22 mit einem hohlzylindrischen Rollenstößel 16, einem Rollenschuh 17 und einer Laufrolle 18 zugeordnet, über die sich der Pumpenkolben 7 am Nocken 4 der Antriebswelle 3 abstützt. Die Stößelbaugruppe 22 und der Pumpenkolben 7 werden durch die vorgespannte Feder 11 zum Nocken 4 der Antriebswelle 3 hin gedrückt. Die Feder 11 ist als den Pumpenkolben 7 umgebende Schraubendruckfeder ausgebildet. Die Feder 11 stützt sich einerseits an einer Gehäusewand des Zylinderkopfes 5 und andererseits an einem Federteller 20 ab. Der Federteller 20 ist mit dem Pumpenkolben 7 verbunden, so dass die Feder 11 sowohl auf den Pumpenkolben 7 als auch auf den Rollenstößel 16 wirkt, um diese gegen den Nocken 4 der Antriebswelle 3 zu drücken. Die Antriebswelle 3 mit dem darauf angeordneten Nocken 4 sowie der Rollenschuh 17 mit der darin angeordneten Laufrolle 18 bilden das Triebwerk 25 der Hochdruckpumpe 1, welches in einem durch das Gehäuse 2 gebildeten Triebwerksraum 26 angeordnet ist. Weiterhin ist in Fig. 1 erkennbar, das in der hier dargestellten Ausführungsform an dem Gehäuse 2 ein Anbauflansch 24 vorhanden ist, der das Triebwerk 25 teilweise, d. h. in der Darstellung von Fig. 1 links des Nockens 4 einschließt, so dass ein Triebwerksraum 26 teilweise durch das Gehäuse 2 und teilweise durch den Anbauflansch 24 eingeschlossen wird. Der Triebwerksraum 26 kann jedoch auch bei anderen Konfigurationen der Hochdruckpumpe vollständig durch das Gehäuse 2 eingeschlossen werden. Weiterhin weist die hier dargestellte Hochdruckpumpe 1 eine Zumesseinheit 23 auf.

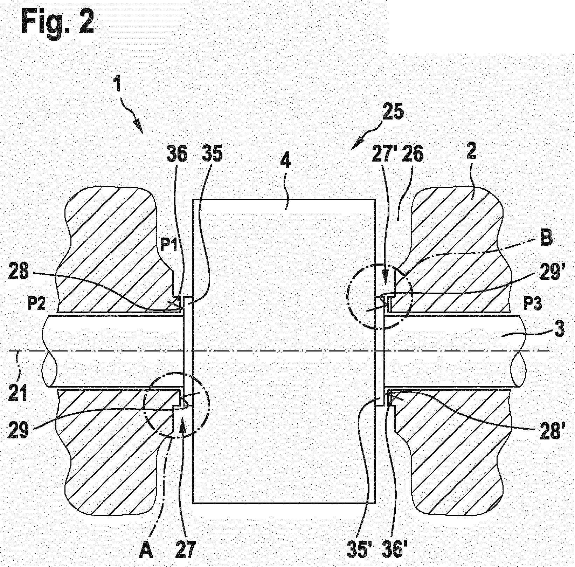

Fig. 2 ist eine Schnittansicht durch einen Teil des Triebwerks 25 einer Hochdruckpumpe 1 gemäß einer Ausführungsform, bei welcher die Antriebswelle 3 durch ein hydrodynamisches Axialgleitlager 27, 27' gelagert ist. An dem Nocken 4 ist eine erste Lagerfläche 28 an der linken Seite als ringförmiger erster Anlaufbund 35 und eine erste Lagerfläche 28' an der rechten Seite als ringförmiger Anlaufbund 35' ausgebildet. Weiterhin ist an dem Gehäuse 2 eine zweite Lagerfläche 29 gegenüberliegend der ersten Lagerfläche 28 als zweiter ringförmiger Anlaufbund 36 und eine weitere zweite Lagerfläche 29' gegenüberliegend der zweiten Lagerfläche 28' ebenfalls als zweiter ringförmiger Anlaufbund 36' ausgebildet. In dem Triebwerksraum 26 herrscht im Bereich des Nockens 4 ein erster Druck P1. Um den linksseitig des Nockens 4 abragenden Abschnitt der Antriebswelle 3 herrscht in dem Triebwerksraum 26 ein zweiter Druck P2 und um den rechtsseitig des Nockens 4 abragenden Abschnitt der Antriebswelle 3 herrscht in dem Triebwerksraum 26 ein dritter Druck P3, wobei der erste Druck P1 sowohl größer als der zweite Druck P2 als auch größer als der dritte Druck P3 ist (P1>P2; P1>P3), so dass Schmiermittelversorgung in dem durch A gekennzeichneten Bereich des Axialgleitlagers aufgrund von ΔP = P1 - P2 > 0 erfolgt.

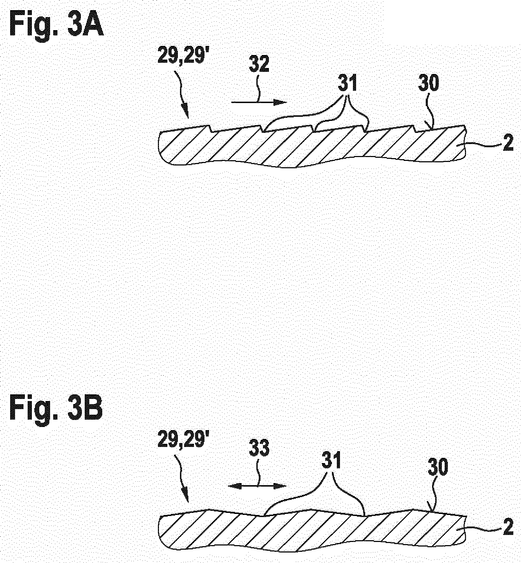

Fig. 3A und 3B sind jeweilige schematische Darstellungen eines Abschnitts einer an dem Gehäuse 2 vorgesehenen zweiten Lagerfläche 29, 29'. Wie hier erkennbar ist, ist an der Oberfläche 30 der zweiten Lagerfläche 29, 29' eine Vielzahl von Kanälen 31 ausgebildet, welche bei Drehung der Antriebswelle 3 um ihre Drehachse 21 (siehe Fig. 2) von einem Schmiermittel wie Öl oder Kraftstoff durchströmt werden. Um einen guten Druckaufbau zu erzielen, bilden die Kanäle 31 Spalte im µm-Bereich. Wie in Fig. 3A darüber hinaus erkennbar ist, sind die keilförmigen Kanäle 31 jeweils entgegen der durch den Pfeil 32 gekennzeichneten Drehrichtung der Antriebswelle 3 abgeflacht, wohingegen die in Fig. 3B dargestellten Kanäle 31 jeweils dachförmig in beide Richtungen gleichmäßig abfallend ausgebildet sind, so dass eine Drehung in beide Richtungen möglich ist, wie durch den Doppelpfeil 33 angedeutet ist. In einer weiteren, hier jedoch nicht dargestellten Ausführungsform, können die Kanäle 31 jedoch alternativ in der ersten Lagerfläche 28, 28' des an dem Nocken 4 beidseitig angeordneten ersten ringförmigen Anlaufbunds 35, 35' vorgesehen sein.

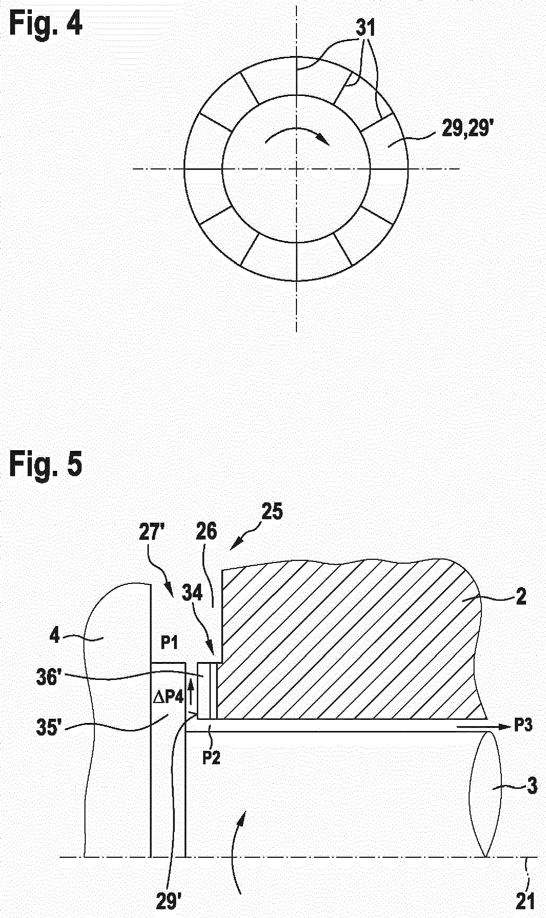

Fig. 4 ist eine Draufsicht auf einen zweiten ringförmigen Anlaufbund 36, 36' mit einer zweiten Lagerfläche 29, 29', wie in Fig. 3A dargestellt. Alternativ kann auch der erste ringförmige Anlaufbund 35, 35', an dessen Stirnseite die erste Lagerfläche 28, 28' angeordnet ist, mit den radial angeordneten Kanälen 31 versehen sein.

Fig. 5 ist eine Detailansicht des in Fig. 2 dargestellten Triebwerks 25 an dem durch einen Kreis markierten Abschnitt B, wobei das radiale Gleitlager hier von dem zweiten Druck P2 in Richtung zu dem dritten Druck P3 durchströmt wird (P1 - P3 > 0). Eine Anbindung des Bereichs des Triebwerksraums 26, in welchem der zweite Druck P2 vorherrscht erfolgt hier durch radiale Bohrungen. Um den Bereich, in welchem der zweite Druck P2 vorherrscht, an den Bereich, wo der erste Druck P1 - nämlich der Innenraumdruck in dem Triebwerksraum 26 - vorherrscht, anzubinden, sind radiale Bohrungen 34 in dem zweiten Anlaufbund 36' vorgesehen, an dessen Stirnseite die zweite Lagerfläche 29' angeordnet ist, welche parallel zu der Keilgeometrie der Kanäle 31 (siehe Fig. 4) ausgebildet sind. Sind die Kanäle gemäß einer weiteren Ausführungsform in dem ersten Anlaufbund 35, 35', an welchem die erste Lagerfläche 28, 28' (siehe Fig. 2) angeordnet ist, vorgesehen, dann sind ebenfalls die radialen Bohrungen 34 in diesem ersten Anlaufbund 35, 35' vorgesehen. Der Pumpeffekt des Axialgleitlagers 27, 27' durch die Zentrifugalkraft der mitgeschleppten Schmiermittelmenge im Kontaktbereich wird zu dessen Durchströmung genutzt. Im Axialgleitlager 27, 27' stellt sich hierbei durch die Pumpwirkung eine Durchströmung der keilförmigen Kanäle 31 von innen nach außen ein. D. h., es entsteht eine Druckdifferenz ΔP4 aufgrund der Rotation der Antriebswelle 3 um ihre Drehachse 21 herum. Schmiermittel wird dabei rotatorisch durch die Antriebswelle 3 angetrieben und aufgrund der Fliehkraft nach außen bewegt (→ ΔP4), wobei die folgenden Druckbedingungen an dem durch B (siehe Fig. 2) gekennzeichneten Abschnitt des Triebwerksraums 26 vorliegen: ΔP > 0; P1 - P3 > 0; P2 - P3 > 0; und P1 ∼ P2.

Die erfindungsgemäße Hochdruckpumpe 1 ermöglicht es somit, ein Axiallager als hydrodynamisches Axialgleitlager auszubilden, wodurch einfache und kostengünstige Werkstoffe eingesetzt werden können und ohne dass ein übermäßiger Verschleiß auftritt.

## Patentansprüche

1. Hochdruckpumpe (1) für eine Kraftstoffeinspritzeinrichtung einer Brennkraftmaschine, welche ein in einem Gehäuse (2) angeordnetes Triebwerk (25) mit einer mit zumindest einem Nocken (4) versehenen und über ein Axiallager in dem Gehäuse (2) gelagerten Antriebswelle (3) und einer Stößelbaugruppe (22) und zumindest einen Pumpenkolben (7) aufweist, welcher durch die Drehung der Antriebswelle (3) um eine Drehachse (21) herum über den zumindest einen an der Antriebswelle (3) angeordneten Nocken (4) und die an dem zumindest einen Pumpenkolben (7) angeordnete Stößelbaugruppe (22) in einer Hubbewegung in im Wesentlichen radialer Richtung zu der Drehachse (21) der Antriebswelle (3) angetrieben wird, wobei das Axiallager als Axialgleitlager (27, 27') ausgebildet ist,
**dadurch gekennzeichnet, dass**
an dem Axialgleitlager (27, 27') zumindest eine erste Lagerfläche (28, 28') als ein erster ringförmiger Anlaufbund (35, 35') an dem Nocken (4) ausgebildet ist und dass an dem Axialgleitlager (27,27') zumindest eine zweite Lagerfläche (29, 29') als ein zweiter ringförmiger Anlaufbund (36, 36') an dem Gehäuse (2) ausgebildet ist, wobei an einer Oberfläche (30) der zweiten Lagerfläche (29, 29') eine Vielzahl von Kanälen (31) ausgebildet ist, welche von einem Schmiermittel während der Drehung der Antriebswelle (3) durchströmbar sind, wobei in dem zweiten ringförmigen Anlaufbund (36, 36') eine Vielzahl von radialen Bohrungen (34) vorgesehen ist, welche im Wesentlichen parallel zu der Vielzahl von Kanälen (31) ausgebildet sind.

2. Hochdruckpumpe (1) nach Anspruch 1,
**dadurch gekennzeichnet, dass**
das Axialgleitlager ein hydrodynamisches Axialgleitlager (27, 27') ist.

3. Hochdruckpumpe (1) nach Anspruch 1 oder 2,
**dadurch gekennzeichnet, dass**
die Vielzahl von Kanälen (31) jeweilige Kanäle (31) aufweist, welche im Wesentlichen keilförmig ausgebildet sind, wobei die jeweiligen Kanäle (31) jeweilige Spalte bilden, deren Breite im µm-Bereich liegt.

4. Hochdruckpumpe (1) nach einem oder mehreren der Ansprüche 1 bis 3,
**dadurch gekennzeichnet, dass**
die Hochdruckpumpe (1) als Radialkolbenpumpe ausgebildet ist.

5. Hochdruckpumpe (1) nach einem oder mehreren der Ansprüche 1 bis 4,
**dadurch gekennzeichnet, dass**
das Schmiermittel Schmieröl oder Kraftstoff ist.

## Claims

1. High-pressure pump (1) for a fuel injection device of an internal combustion engine, which has a power unit (25) arranged in a housing (2) having a drive shaft (3), which is provided with at least one cam (4) and is mounted in the housing (2) via an axial bearing, and a plunger assembly (22), and which has at least one pump piston (7), which is driven by the rotation of the drive shaft (3) about an axis of rotation (21) via the at least one cam (4) arranged on the drive shaft (3) and the plunger assembly (22) arranged on the at least one pump piston (7) in a stroke movement in a substantially radial direction to the axis of rotation (21) of the drive shaft (3), wherein the axial bearing is designed as an axial plain bearing (27, 27'), **characterized in that** at least one first bearing surface (28, 28') is formed on the axial plain bearing (27, 27') in the form of a first annular stop collar (35, 35') on the cam (4), and **in that** at least one second bearing surface (29, 29') is formed on the axial plain bearing (27, 27') in the form of a second annular stop collar (36, 36') on the housing (2), wherein a multiplicity of channels (31), through which a lubricant can flow during the rotation of the drive shaft (3), are formed on a surface area (30) of the second bearing surface (29, 29'), wherein a multiplicity of radial bores (34) which are formed substantially parallel to the multiplicity of channels (31) are provided in the second annular stop collar (36, 36').

2. High-pressure pump (1) according to Claim 1, **characterized in that** the axial plain bearing is a hydrodynamic axial plain bearing (27, 27').

3. High-pressure pump (1) according to Claim 1 or 2, **characterized in that** the multiplicity of channels (31) have respective channels (31) which are of substantially wedge-shaped design, wherein the respective channels (31) form respective gaps, the width of which lies in the µm range.

4. High-pressure pump (1) according to one or more of Claims 1 to 3, **characterized in that** the high-pressure pump (1) is designed as a radial piston pump.

5. High-pressure pump (1) according to one or more of Claims 1 to 4, **characterized in that** the lubricant is lubricating oil or fuel.

## Revendications

1. Pompe à haute pression (1) pour un dispositif d'injection de carburant d'un moteur à combustion interne, qui présente un groupe motopropulseur (25) disposé dans un boîtier (2) doté d'un arbre d'entraînement (3) pourvu d'au moins une came (4) et supporté dans le boîtier (2) par un palier axial, et d'un module de poussoir (22), et au moins un piston de pompe (7) qui est entraîné par la rotation de l'arbre d'entraînement (3) autour d'un axe de rotation (21) par le biais de l'au moins une came (4) disposée sur l'arbre d'entraînement (3) et le module de poussoir (22) disposé au niveau de l'au moins un piston de pompe (7) dans un mouvement de course dans une direction essentiellement radiale par rapport à l'axe de rotation (21) de l'arbre d'entraînement (3), le palier axial étant réalisé sous forme de palier lisse axial (27, 27'),
**caractérisée en ce**
**qu'**au moins une première surface de palier (28, 28') est réalisée au niveau du palier lisse axial (27, 27') sous forme de premier épaulement d'entrée annulaire (35, 35') sur la came (4), et **en ce qu'**au moins une deuxième surface de palier (29, 29') est réalisée au niveau du palier lisse axial (27, 27') sous forme de deuxième épaulement d'entrée annulaire (36, 36') au niveau du boîtier (2), une pluralité de canaux (31) étant réalisés au niveau d'une surface (30) de la deuxième surface de palier (29, 29'), lesquels peuvent être parcourus par un lubrifiant pendant la rotation de l'arbre d'entraînement (3), une pluralité d'alésages radiaux (34) étant prévus dans le deuxième épaulement d'entrée annulaire (36, 36'), lesquels sont réalisés essentiellement parallèlement à la pluralité de canaux (31).

2. Pompe à haute pression (1) selon la revendication 1,
**caractérisée en ce que**
le palier lisse axial est un palier lisse axial hydrodynamique (27, 27').

3. Pompe à haute pression (1) selon la revendication 1 ou 2,
**caractérisée en ce que**
la pluralité de canaux (31) présentent à chaque fois des canaux (31) qui sont réalisés essentiellement en forme de coin, les canaux respectifs (31) formant des fentes respectives dont la largeur est de l'ordre du micron.

4. Pompe à haute pression (1) selon l'une quelconque ou plusieurs des revendications 1 à 3,
**caractérisée en ce que**
la pompe à haute pression (1) est réalisée sous forme de pompe à pistons radiaux.

5. Pompe à haute pression (1) selon l'une quelconque ou plusieurs des revendications 1 à 4,
**caractérisée en ce que**
le lubrifiant est de l'huile de lubrification ou du carburant.
